# EUROPÄISCHE PATENTSCHRIFT

(11) **EP 0 799 448 B1**
(45) Veröffentlichungstag und Bekanntmachung des Hinweises auf die Patenterteilung: **02.06.1999**
(21) Anmeldenummer: 95940959.0
(22) Anmeldetag: 14.12.1995
(51) Int. Cl.: G06F 9/46

(54) **RESPONSIVES SYSTEM ZUR SIGNALVERARBEITUNG, VERFAHREN ZUR HERSTELLUNG EINES RESPONSIVEN SYSTEMS UND VERFAHREN ZUR BESTIMMUNG UND ANPASSUNG DER AUSFUEHRUNGSZEIT IN EINEM AUTOMATISIERUNGSPROZESS, WELCHER VON EINEM RESPONSIVEN SYSTEM AUSGEFUEHRT WIRD**
RESPONSIVE SYSTEM FOR SIGNAL PROCESSING, METHOD OF PRODUCING A RESPONSIVE SYSTEM AND METHOD FOR DETERMINING AND ADAPTING THE EXECUTION TIME FOR AN AUTOMATISATION PROZESS EXECUTED BY A RESPONSIVE SYSTEM
SYSTEME AUTO-ADAPTATIF POUR TRAITEMENT DE SIGNAUX, PROCEDE DE PRODUCTION D'UN SYSTEME AUTO-ADAPTATIF ET PROCEDE POUR DETERMINER ET ADAPTER LE TEMPS D'EXECUTION POUR UN PROCESSUS EXECUTE PAR UN SYSTEME AUTO-ADAPTIF

(30) Priorität: 23.12.1994 DE 4446286
(43) Veröffentlichungstag der Anmeldung: 08.10.1997
(73) Patentinhaber: SIEMENS AKTIENGESELLSCHAFT, 80333 München (DE)
(72) Erfinder: WAEDT, Karl, D-91052 Erlangen (DE)
(86) Internationale Anmeldenummer: DE9501794
(87) Internationale Veröffentlichungsnummer: WO9620442

(56) Entgegenhaltungen:
- PROCEEDINGS OF 1995 IEEE INTERNATIONAL COMPUTER PERFORMANCE AND DEPENDABILITY SYMPOSIUM, ERLANGEN, DE, 24. - 26.April 1995, ISBN 0-8186-7059-2, 1995, LOS ALAMITOS, CA, USA, IEEE COMPUT. SOC. PRESS, USA, Seiten 183-192, XP000569232 K. WAEDT ET AL.: "Performability Analysis of Formal Graphical Specifications"
- ESREL '93. PROCEEDINGS OF THE 1ST EUROPEAN SAFETY AND RELIABILITY CONFERENCE, MÜNCHEN, DEUTSCHLAND, 10. - 12.Mai 1993, ISBN 0-444-81561-9, 1993, AMSTERDAM, NL, ELSEVIER, NL, Seiten 825-839, XP000569236 K. WAEDT ET AL.: "SPACE, Specification and Coding Environment. A Toolkit allowing the Graphical Specification of Safety Critical Programs for Automation"
- THE JOURNAL OF REAL-TIME SYSTEMS, Bd. 4, Nr. 1, März 1992, KLUWER ACADEMIC PUBLISHERS, DORDRECHT, NL, Seiten 37-53, XP000324270 C. DOUGLAS LOCKE: "Software Architecture for Hard Real-Time Applications: Cyclic Executives vs. Fixed Priority Executives"
- THE JOURNAL OF REAL-TIME SYSTEMS, Bd. 1, Nr. 2, September 1989, KLUWER ACADEMIC PUBLISHERS, DORDRECHT, NL, Seiten 159-176, XP000291989 P. PUSCHNER ET AL.: "Calculating the Maximum Execution Time of Real-Time Programs"
- PARALLEL COMPUTING, Bd. 16, Nr. 2/3, Dezember 1990, NORTH-HOLLAND, AMSTERDAM, NL, Seiten 173-182, XP000293961 B. VELTMAN ET AL.: "Multiprocessor scheduling with communication delays"

## Beschreibung

Die Erfindung betrifft ein responsives System zur Signalverarbeitung, mit einer Mehrzahl von Datenverarbeitungs-Einheiten, die über Datenübertragungs-Einheiten miteinander verbunden und auf denen Rechnerprogramme implementiert sind, wobei die Rechnerprogramme modular aufgebaut sind. Die Erfindung betrifft weiterhin ein Verfahren zur Herstellung eines responsiven Systems zur Signalverarbeitung in einem Automatisierungsprozeß.

Aus dem Dokument "Proceedings of the European Safety and Reliability Conference", ESREL'93, München, Seiten 825 bis 839, ist es bekannt, mittels gemessener und gespeicherter Bearbeitungszeiten für Software-Module eines responsiven Systems die maximale Verarbeitungszeit und Durchlaufzeit eines Signals abzuschätzen.

Ein responsives, d.h. fehlertolerantes und echtzeitfähiges System zur Signalverarbeitung findet vielseitig im Rahmen eines industriellen Automatisierungsprozesses Anwendung. Von besonderer Bedeutung ist ein responsives System in einem Automatisierungsprozeß, bei welchem die Einhaltung vorgebener Zeitschranken oder die Erbringung geforderter Ausgangssignale innerhalb vorgegebener Zeitintervalle erforderlich ist. Solche Forderungen treten häufig in Fertigungsprozessen, Regelungs- und Steuerungsprozessen sowie Überwachungsprozessen auf, wie beispielsweise in der Sicherheitsleittechnik einer Kernkraftanlage. Die Einhaltung von Zeitschranken bzw. Zeitintervallen hängt entscheidend von der Funktionstüchtigkeit der einzelnen Komponenten, sowohl gerätespezifischer als auch programmspezifischer Komponenten, ab. In komplexen Systemen, bei denen Datenverarbeitungseinheiten zu großen Datennetzen miteinander verbunden sind, sind Fehler in programmspezifischen Komponenten, insbesondere Fehler in Rechnerprogrammen, von besonderer Bedeutung. Diese Fehler können bis zu 60 % der Fehler des gesamten Systems ausmachen. Diese programmspezifischen Fehler lassen sich in drei Gruppen einteilen, wobei mit 55 % sogenannte Spezifikationsfehler am häufigsten auftreten. Mit einem Anteil von etwa 25 % sind Wartungsfehler von etwa der gleichen Bedeutung wie Implementierungsfehler, die bei etwa 20 % liegen. Ein Spezifikationsfehler liegt beispielsweise dann vor, wenn eine Zuordnung zwischen einem Rechnerprogramm und der zur Ausführung des Rechnerprogramms bestimmten gerätespezifischen Komponente (Hardware) fehlerhaft ist, was bei ungenügender Rechenleistung eine zu langsame Ausführung des Rechnerprogramms und damit zu einem Nichteinhalten von Zeitschranken bzw. Zeitintervallen führen kann. Dies wird als timing-basiertes Versagen eines responsiven Systems bezeichnet.

Um die Einhaltung der Zeitschranken und der Zeitintervalle zu gewährleisten, werden eine bestimmung und eine Überprüfung des Datenaustausches zwischen einzelnen Datenverarbeitungseinheiten sowie die Bearbeitung der Daten auf den Datenverarbeitungseinheiten geregelt. Dies wird häufig als "Scheduling" bezeichnet. Bei responsiven Systemen wird zwischen einem üblichen Scheduling während der Laufzeit der Signalverarbeitung in den das responsive System bildenden Datenverarbeitungseinheiten und einem Vorabscheduling ("Pre-Runtime-Scheduling") unterschieden. Bei einem Scheduling zur Laufzeit ist ein Steuerungsmodul zur Einhaltung der Zeitschranken bzw. Zeitintervalle vorgesehen, welches die Abfolge von Rechnerprogrammen in einem Prozessor einer Datenverarbeitungseinheit bestimmt. Jedes dieser Rechnerprogramme kann dabei, während es in dem Prozessor abgearbeitet wird, nach Ablaufen eines Bearbeitungsintervalles mit vorgegebener Dauer, einer frühzeitigen Beendigung der Berechnung oder von außen gesteuert aus dem Prozessor wieder entfernt werden. Es handelt sich hierbei um eine unterbrechungsgesteuerte Arbeitsweise (Interrupt-Arbeitsweise) des responsiven Systems. Bei einer anderen bekannten Arbeitsweise erfolgt die Steuerung des Datenaustausches zwischen Datenverarbeitungs-Einheiten sowie die Steuerung der Reihenfolge der Abarbeitung einzelner Teilprogramme in einem Prozessor einer Datenverarbeitungs-Einheit unter Berücksichtigung der Abhängigkeiten zwischen den einzelnen Teilprogrammen. Die Abhängigkeiten werden über sogenannte Graphen bildlich definiert. Die Teilprogramme sind hierbei als Knotenpunkte dargestellt, welche über gerichtete Strecken miteinander verbunden sind. Ein Teilprogramm wird jeweils dann ausgeführt, wenn die Bedingungen sämtlicher zu dem Knotenpunkt führender gerichteter Strecken erfüllt sind. Die Abhängigkeit zwischen den einzelnen Teilprogrammen kann vor Ausführung des Automatisierungsprozesses bestimmt werden, wobei für die Ausführung jedes Teilprogrammes eine maximale Zeitdauer angegeben werden kann. Diese Zeitdauer wird in eine Anzahl von gleichlangen Zeitintervallen unterteilt, in denen die Teilprogramme in dem Prozessor abgearbeitet werden. Während der Ausführung des Automatisierungsprozesses wird von einem Steuerungsmodul jeweils nach Ablaufen eines Zeitintervalles geprüft, welche Teilprogramme die Kriterien für eine Abarbeitung erfüllen. Nach Prüfung werden entsprechend der vorgegebenen Prioritäten die entsprechenden Teilprogramme gestartet. Trotz einer Vorabbestimmung der Ausführungszeiten und der Abhängigkeiten der Teilprogramme untereinander ist wie oben aufgeführt bei einer periodischen in Zeitintervallen unterteilte Bearbeitung, in denen jeweils ein Teilprogramm in einem Prozessor bearbeitet wird, eine zusätzliche Überprüfung und Steuerung notwendig. Die Überprüfung dient der Ermittlung, für welche Teilprogramme die notwendigen Informationen zur Bearbeitung vorliegen, und mit der Steuerung wird das Teilprogramm mit der jeweils höchsten Priorität für die Bearbeitung in dem Prozessor während des nächstfolgenden Zeitintervalles ausgewählt. Aufgrund der Komplexität und der Nichtvorhersagbarkeit des Ablaufes der Überprüfung und der Steuerung ist eine Vorabaussage über die Einhaltung von Zeitschranken und Zeitintervallen für den Automatisierungsprozeß nicht möglich, sondern ergibt sich erst während der, insbesondere periodischen, Bearbeitung des Automatisierungsprozesses.

Aufgabe der Erfindung ist es daher, ein responsives System zur Signalverarbeitung, insbesondere zur digitalen Signalverarbeitung, anzugeben, welches aus einem Eingangssignalzustand einen Ausgangssignalzustand erzeugt und vor Bearbeitung des Eingangssignalzustandes die Bestimmung einer maximalen Ausführungszeit für die Erzeugung des Ausgangssignalzustandes ermöglicht. Eine weitere Aufgabe besteht darin, ein Verfahren zur Herstellung eines responsiven Systems zur Signalverarbeitung in einem Automatisierungsprozeß anzugeben.

Erfindungsgemäß wird die erstgenannte Aufgabe durch ein responsives System zur Signalverarbeitung in einem Automatisierungsprozeß gelöst, welches eine Mehrzahl von Datenverarbeitungs-Einheiten hat, die über Datenübertragungs-Einheiten miteinander verbunden sind und auf denen Rechnerprogramme implementiert sind, welche modular aus einer Anzahl von Funktionsbausteinen augebaut sind, und bei dem für jeden Funktionsbaustein eine maximale Bearbeitungszeit in Abhängigkeit von einer dem Funktionsbaustein zugeordneten jeweiligen Datenverarbeitungs-Einheit sowie eine maximale Übertragungszeit jeder Datenübertragungs-Einheit bestimmt wird, wobei
(a) die Rechnerprogramme einer ganzheitlichen Bearbeitungsspezifikation des Automatisierungsprozesses folgend formal spezifiziert und automatisch modular aus den Funktionsbausteinen aufgebaut werden,
b) das System zu einem Eingangssignalzustand gemäß der ganzheitlichen Bearbeitungsspezifikation umfassend Zuordnungen und Anforderungen der Datenverarbeitungs-Einheiten, der Datenübertragungs- Einheiten und der Rechenprogramme einen Ausgangsignalzustand erzeugt sowie weiterhin umfaßt,
c) eine erste Datenbank, in der die maximale Bearbeitungszeit jedes Funktionsbausteins sowie die maximale Übertragungszeit jeder Datenübertragungs-Einheit gespeichert sind,
d) eine zweite Datenbank, in der Zuordnungen der beteiligten Datenverarbeitungs-Einheiten, der Datenübertragungs-Einheiten und der beteiligten Rechnerprogramme untereinander sowie Schrittfolgen von Signalverarbeitungen gemaß der Bearbeitungsspezifikation gespeichert sind,
e) eine dritte Datenbank, in der Kenngrößen der Datenverarbeitungs-Einheiten, der Datenübertragungs-Einheiten und der Rechnerprogramme, insbesondere Bauart, Versionsnummer und technische Spezifikation, gespeichert sind,
   und
f) ein Timing-Modul, welche aus den in den Datenbanken gespeicherten Daten eine maximale Ausführungszeit für die Erzeugung des Ausgangssignalzustandes aus dem Eingangssignalzustand des responsiven Systems bestimmt.

Die Erzeugung des Ausgangssignalzustandes aus dem Eingangssignalzustand erfolgt in Echtzeit, wobei hierin eine Summe von Echtzeitteilaufgaben anhand der ganzheitlichen Bearbeitungsspezifikation bearbeitet und gelöst werden. Die Bearbeitungsspezifikation enthält eine Untergliederung jeder Echtzeitteilaufgabe in verschiedene Strukturebenen. Hierzu wird ein Funktionsplan erstellt, welcher die Echtzeitteilaufgabe modular in Unteraufgaben zerlegt bis in eine Ebene herunter, in der zugehörige Unteraufgaben mit elementaren Funktionen gelöst werden können. Für die Bearbeitung jeder dieser elementaren Funktionen, beispielsweise 30 bis 50 verschiedene Funktionen, ist ein jeweiliger Funktionsbaustein vorgesehen. Zu jedem Funktionsbaustein wird automatisch ein eindeutig zugeordnetes Rechnerprogramm erzeugt. Der Funktionsbaustein kann allerdings auch über eine festverdrahtete Schaltung realisiert sein. Aufgrund der modularen Struktur der zur Lösung einer Echtzeitteilaufgabe angegebenen Funktionspläne wird automatisch aus den Funktionsbausteinen ein Rechnerprogramm zur Lösung jeder Echtzeitteilaufgabe erzeugt. Durch die Verwendung der wenigen unterschiedlichen Funktionsbausteine mit bekannter Bearbeitungszeit ist es möglich, die Bearbeitungszeit für den zeitaufwendigsten und nicht homogenen Teil jedes Rechnerprogrammes nicht nur zu schätzen, sondern auch zu messen. Für jede Datenverarbeitungs-Einheit liegen somit schon mit der Bearbeitungsspezifikation präzise Aussagen über die maximale Bearbeitungszeit vor. Eine Analyse des Quelltextes eines jeden Rechnerprogrammes ist nicht mehr notwendig, vielmehr wird die maximale Bearbeitungszeit eines jeden Funktionsbausteines in Abhängigkeit der Datenverarbeitungs-Einheit, insbesondere des den Funktionsbaustein bearbeitenden Prozessors, gemessen. Diese maximale Bearbeitungszeit wird in der ersten Datenbank gespeichert. Für jede Messung werden in die dritte Datenbank zugehörige Kenngrößen sowohl der Datenverarbeitungs-Einheit, die den genauen Typ der Datenverarbeitungs-Einheit indentifizieren, gespeichert. Dies sind unter anderem der Typ des Prozessors, seine Taktfrequenz, die Größe des zur Verfügung stehendes Zwischenspeichers (Cache), die Zugriffszeit des Speichers, die Anzahl der "Wait-States". Weiterhin können die verwendete Optimierungsstufe bei der Umsetzung des Funktionbausteins in eine Programmiersprache einee Kenngröße sein. Eine Bestimmung der maximalen Bearbeitungszeit eines Funktionbausteines erfolgt insbesondere über eine Vielzahl durchgeführter Messungen, beispielsweise in der Größenordnung von 10⁴ bis 10⁷, der Bearbeitungszeit des Funktionsbausteins in jeder möglichen Betriebsart. Weiterhin kann die Messung nicht nur an einem einzigen Funktionsbaustein, sondern an einer Vielzahl von Funktionbausteinen desselben Typs, erfolgen. Die Anzahl an gleichartigen Funktionsbausteinen ist vorzugsweise so groß wie die Anzahl von Funktionsbausteinen in einem Funktionsplan. Die Funktionsbausteine greifen bei der Messung jeweils auf die gleichen Werte zu, die jedoch in anderen Speicherbereichen abgelegt sind. Hierdurch wird während der Messung eine Meßumgebung bereitgestellt, die nicht günstiger als die Ausführungsumgebung während der tatsächlichen Signalverarbeitung ist. Die hieraus gewonnene maximale Bearbeitungszeit kann somit als sichere obere Grenze für die Bearbeitungszeit des Funktionsbausteins angenommen werden. Die maximale Bearbeitungszeit beträgt beispielsweise für die unterschiedlichen Funktionsbausteine auf einem Prozessor 80486 der Firma Intel mit einer Taktfrequenz von 33 MHz zwischen 3 µs und 1,5 ms.

Da außer dem Aufruf eines einzelnen Funktionsbausteins innerhalb eines Funktionsplanes zur Lösung einer Echtzeitteilaufgabe zusätzlich nur noch Kopier- und Negations-Operationen erforderlich sind, deren maximale Bearbeitungszeit einfach bestimmbar ist, ist unter Berücksichtigung der Zuordnung der Datenverarbeitungs-Einheiten untereinander und der maximalen Übertragungszeit zwischen den Datenverarbeitungs-Einheiten die maximale Ausführungszeit für die Erzeugung des Ausgangssignalzustandes gegeben, welche durch das Timing-Modul bestimmt wird. Die in den drei Datenbanken gespeicherten Werte können auch in nur einer einzigen Datenbank gespeichert sein.

Für jeden Funktionsbaustein lassen sich drei Betriebsarten unterscheiden, nämlich die Initialisierung, die Parametrisierung und der laufende Betrieb. Während der Parametrisierung erfolgt unter anderem eine Bestimmung von abgeleiteten Parametern und eine Berechnung der für den Funktionsbaustein notwendigen Zustandsspeicher. Während der Initialisierung wird der Funktionsbaustein initialisiert. Dies kann bei einem aufwendigen Funktionsbaustein länger als die maximale Bearbeitungszeit während des laufenden Betriebs dauern. Da die Initialisierung allerdings der eigentlichen Signalverarbeitung vorgeschaltet ist, hat dies für die maximale Ausführungszeit des responsiven Systems während der Betriebsphase keinerlei Auswirkungen.

Vorzugsweise weist das responsive System ein Scheduling-Modul zur Erstellung eines Scheduling-Plans auf, welcher die Anfangszeitpunkte für eine periodische Abarbeitung der einzelnen Datenverarbeitungs-Einheiten und die Sendezeitpunkte für Daten-Telegramme so festgelegt, daß die maximale Ausführungszeit des gesamten Systems kleiner als eine vorgegebene Zeitdauer ist. Eine Festlegung der Sendezeitpunkte erfolgt unter Berücksichtigung der in den Datenbanken gespeicherten Daten, insbesondere der Übertragungs- und Bearbeitungszeiten, sowie der Zuordnung der Datenverarbeitungs-Einheiten und der Datenübertragungs-Einheiten zueinander. Jede Datenverarbeitungs-Einheit sendet in einem vorgegebenen periodischen Zeitabstand Daten-Telegramme aus, welche die für andere Datenverarbeitungs-Einheiten erforderlichen Signale enthalten. Die in einer Datenverarbeitungs-Einheit eintreffenden Signale werden ebenfalls periodisch abgearbeitet. Um zu gewährleisten, daß die von einer Datenverarbeitungs-Einheit abgesandten Signale rechtzeitig zur nächstfolgenden periodischen Abarbeitung in einer empfangende Datenverarbeitungs-Einheit gelangen, sind die Datenverarbeitungs-Einheiten untereinander synchronisiert. Eine Synchronisation kann beispielsweise über einen externen Zeitgeber erfolgen, mit dem sämtliche Datenverarbeitungs-Einheiten in Verbindung stehen. Eine Synchronisation kann auch zwischen zwei Datenverarbeitungs-Einheiten direkt erfolgen, indem die Sendezeitpunkte der sendenden Datenverarbeitungs-Einheit mit den Abarbeitungszeitpunkten der empfangenden Datenverarbeitungs-Einheit ständig verglichen und aufeinander angeglichen werden.

Durch die in den Datenbanken gespeicherten Daten des Übertragungsverhaltens des responsiven Systems ist eine Festlegung des Scheduling-Plans vor Inbetriebnahme des responsiven Systems möglich. Die Sende- und Abarbeitungszeitpunkte der einzelnen Datenverarbeitungs-Einheiten lassen sich so festlegen, daß eine hohe Auslastung des responsiven Systems erreicht wird. Die zu einem Netzwerk zusammengeschalteten Datenverarbeitungs- und Datenübertragungs-Einheiten werden in ihren Sende- und Empfangszeitpunkten so aufeinander abgestimmt, daß auf dem Netz keine Kollissionen auftreten und das Netz nicht über einen vorgegebenen Prozentsatz ausgelastet wird. Hierdurch ist ein völlig deterministisches Verhalten des responsiven Systems gewährleistet, wobei die Komponenten des Systems räumlich über große Entfernungen verteilt sein können. Darüber hinaus ist dadurch für ein responsives System mit verteilten Komponenten, wie beispielsweise in der Sicherheitsleittechnik einer Kernkraftanlage, bei Auftreten einer Vielzahl sicherheitstechnisch relevanter Signale eine unzulässige Zuleitung einer Vielzahl von Signalen an eine Datenverarbeitungs-Einheit, die deren Bearbeitung verlangsamt oder zu einer fehlerhaften Bearbeitung führt, sicher vermieden. Im Gegensatz zu bekannten responsiven Systemen, bei denen sowohl die Erstellung eines Scheduling-Plan als auch eine Messung der Auslastung des durch die Komponenten gebildeten Netzes erst während des Betriebes erfolgt, ist dies bei dem angegebenen responsiven System schon vor Beginn des Betriebes erfolgt. Hierzu wird vorab eine Auswahl der geeigneten Geräte, insbesondere Prozessoren und Datenübertragungseinheiten, wie Koaxial-Leitungen, Verstärker, Repeater, Bridges, etc. durchgeführt. Das Einhalten von Zeitschranken und Zeitintervallen ist dadurch schon vorab sicher gewährleistet. Der Nachweis der Einhaltung von Zeitschranken und Zeitintervallen erfolgt über den modularen Aufbau des responsiven Systems anhand der ganzheitlichen Bearbeitungsspezifikation, die eine entsprechende modulare deterministische Unterteilung in Funktionspläne aufweist, welche wiederum aus elementaren Funktionsbausteinen zusammengesetzt sind.

Vorzugsweise weist das responsive System ein Überwachungsmodul auf, welchem sämtliche Änderungen der Bearbeitungs- und Übertragungszeiten, insbesondere durch Veränderung der Datenverarbeitungs-Einheiten, der Datenübertragungs-Einheiten oder der Funktionsbausteine, zugeführt wird. Diese Änderungen sowie Änderungen in der ganzheitlichen Bearbeitungsspezifikation und damit auch in der Zuordnung der einzelnen Komponenten des responsiven Systems zueinander führt das Überwachungs-Modul dem Timing-Modul zur Bestimmung aktualisierter Ausführungszeiten zu. Mit diesen Änderungen in der ganzheitlichen Bearbeitungsspezifikation und damit in den Datenverarbeitungs-Einheiten, den Datenübertragungs-Einheiten und den Funktionsbausteinen erfolgt in dem Scheduling-Modul ebenfalls eine neue Festlegung der Sendezeitpunkte von Daten-Telegrammen und der Abarbeitungszeitpunkte von eingehenden Signalen. Hierdurch ist auch bei Änderungen die Echtzeitfähigkeit und Fehlertoleranz des responsiven Systems weiterhin gewährleistet.

Das responsive System eignet sich bevorzugt in einem leittechnischen System zur Steuerung und/oder Regelung einer industriellen Anlage. Das leittechnische System weist Signalerzeugungs-Elemente und Regelelemente und/oder Steuerungselemente auf, wobei die Signalerzeugungs-Elemente über die Datenverarbeitungs-Einheiten und Datenübertragungs-Einheiten mit den Regelelementen und/oder Steuerungselementen verbunden sind. Ein von den Signalerzeugungs-Elementen erzeugter Eingangssignalzustand wird durch das responsive System echtzeitmäßig bearbeitet, und der Ausgangssignalzustand des responsiven Systems liefert die Eingangssignale für die Steuerungselemente und/oder Regelungselemente. Signalerzeugungs-Elemente können dabei elektrische, optische oder mechanische Sensoren sein, die den Eingangssignalzustand erzeugen. Dieser Eingangssignalzustand wird vorzugsweise periodisch abgerufen. Steuerungs- und/oder Regelungselemente können Ventile, Stellantriebe, Pumpen sowie elektrische Steuerungs- und Regelglieder sein. Besonders eignet sich das responsive System in einem leittechnischen System einer Kernkraftanlage für die Steuerung von sicherheitstechnisch relevanten Komponenten.

Vorzugsweise sind die Funktionsbausteine einer Datenverarbeitungs-Einheit, welche mit derselben Periode auf der Datenverarbeitungs-Einheit abgearbeitet werden, in einer Funktionsplan-Gruppe zusammengefaßt. Die Funktionsplan-Gruppe wird mit einer vorgegebenen Periode in den Prozessor der Datenverarbeitungs-Einheit eingeladen und dort, ohne unterbrochen zu werden, abgearbeitet, so daß die periodische Abarbeitung jedes einzelnen Funktionsbausteins gewährleistet ist. Eine Prioritätssteuerung bzw. Unterbrechungssteuerung für die Abarbeitung der Funktionsbausteine ist somit nicht erforderlich, wodurch die Abarbeitung besonders einfach realisiert ist.

Bei Funktionsbausteinen mit unterschiedlichen periodischen Abarbeitungszeiten lassen sich verschiedene FunktionsplanGruppen angeben, die jeweils eine andere Periodendauer besitzen. Als Referenzperiode dient dabei die kürzeste Periodendauer zur Abarbeitung eines Funktionbausteins. Während dieser Referenzperiode erfolgt jedesmal eine Abarbeitung der Funktionsbausteine mit der kürzesten Periodendauer sowie eine Abarbeitung eines Bruchteiles der Funktionsbausteine, die eine längere Periodendauer aufweisen. Beispielsweise beträgt die Periodendauer einer schnellen Funktionsplangruppe 5 ms und die einer langsamen Funktionsplangruppe 50 ms. Während der Periodendauer von 5 ms werden jedesmal die schnelle Funktionsplangruppe und jeweils ein Zehntel der langsamen Funktionsplangruppe abgearbeitet, so daß nach Ablauf einer Periodendauer von 50 ms die schnelle Funktionsplangruppe insgesamt zehnmal, die langsame Funktionsplangruppe hingegen genau einmal abgearbeitet wurde, wie es ihrer Periodendauer entspricht. Hierdurch ist zudem erreicht, daß die Funktionsbausteine der langsamen Funktionsplangruppe jeweils auf die neuesten Werte der schnellen Funktionsplangruppe zugreifen können, falls dies erforderlich ist. Vorzugsweise erfolgt eine Verarbeitung der von der Datenverarbeitungs-Einheit empfangenen Daten-Telegramme sowie der von ihr gesendeten Daten-Telegramme durch die langsamste Funktionsplangruppe, da diese maßgebend für die Bearbeitungszeit der Datenverarbeitungs-Einheit ist und somit auch die Empfangs- und Sendezeitpunkte bestimmt.

Die einzelnen Funktionsplangruppen können dabei während der Bearbeitung der langsamsten Funktionsplangruppe auch Ein- und Ausgabeoperationen mit unmittelbar an die Datenverarbeitungs-Einheit angeschlossenen Peripherie-Einheiten durchführen. Solche Peripherie-Einheiten sind beispielsweise analoge und digitale Eingabebaugruppen sowie Prozessoren zur Erfassung und Filterung von Signalen. Da solche Peripherie-Einheiten allein in der Abarbeitungsfolge der zugeordneten Datenverarbeitungs-Einheit behandelt werden, ist eine Einbeziehung bei der Ermittlung des Scheduling-Plans nicht erforderlich. In einer Funktionsplangruppe können beispielsweise bis zu zwischen 50 und 100 aus einzelnen Funktionsbausteinen zusammengesetzte Funktionsplane enthalten sein, so daß die während der Referenzperiode zur Verfügung stehende Rechenzeit weitgehend vollständig genutzt werden kann. Durch eine Bestimmung und Aufteilung der Funktionsplangruppen zur Bearbeitung während der langsamsten Periodendauer kann von einer prioritätsgesteuerten Bearbeitung auf jeder Datenverarbeitungs-Einheit abgesehen werden. Diese Bestimmung und Aufteilung ist vor Inbetriebnahme des responsiven Systems möglich. Unter Umständen wird lediglich noch ein von dem Prozessor der Datenverarbeitungs-Einheit abzuarbeitendes Kommando zur Selbstüberwachung mit einer niedrigen Priorität benötigt. Das responsive System erfüllt somit die Forderung nach einer minimalen Anzahl von Unterbrechungskommandos (Interrupts). Es ermöglicht darüber hinaus den Einsatz von automatisch erzeugten Rechnerprogrammen.

Die auf ein Verfahren zur Herstellung eines responsiven Systems zur Signalverarbeitung in einem Automatisierungsprozeß gerichtete Aufgabe wird erfindungsgemäß dadurch gelöst, daß eine Mehrzahl von Datenverarbeitungs-Einheiten, die über Datenübertragungs-Einheiten miteinander verbunden und mit Rechnerprogrammen, die modular aus einer Anzahl von Funktionsbausteinen aufgebaut sind, versehen wird und daß für jeden Funktionsbaustein eine maximale Bearbeitungszeit in Abhängigkeit von einer dem Funktionsbaustein zugeordneten jeweiligen Datenverarbeitungs-Einheit sowie eine maximale Übertragungszeit jeder Datenübertragungs-Einheit bestimmt wird, wobei
a) einer ganzheitlichen Bearbeitungsspezifikation des Automatisierungsprozesses folgend die Rechnerprogramme formal spezifiziert und automatisch modular aus den Funktionsbausteinen aufgebaut werden,
b) das System zu einem Eingangssignalzustand gemäß der ganzheitlichen Bearbeitungsspezifikation umfassend Zuordnungen und Anforderungen der Datenverarbeitungs-Einheiten, der Datenübertragungs-Einheiten und der Rechenprogramme einen Ausgangssignalzustand erzeugt,
c) die Übertragungs- und Bearbeitungszeiten in einer ersten Datenbank gespeichert werden,
d) Zuordnungen der beteiligten Datenverarbeitungs-Einheiten, der Datenübertragungs-Einheiten und der beteiligten Rechnerprogramme untereinander sowie Schrittfolgen von Signalverarbeitungen gemäß der Bearbeitungsspezifikation in einer zweiten Datenbank gepeichert werden,
e) Kenngrößen der Datenverarbeitungs-Einheiten, der Datenübertragungs-Einheiten und der Rechnerprogramme, insbesondere Bauart, Versionsnummer und technische Spezifikation, in einer dritten Datenbank gespeichert werden,
   und
f) aus den in den Datenbanken gespeicherten Daten unter Berücksichtigung der Vernetzung der Datenverarbeitungs-Einheiten sowie dem modularen Rufbau der Rechnerprogramme eine maximale Ausführungszeit für den Automatisierungsprozeß bestimmt wird.

Für ein so hergestelltes responsives System ist die maximale Ausführungszeit vor Inbetriebnahme bestimmt. Hierdurch kann eine sichere Aussage getroffen werden, ob mit dem so erstellten responsiven System der Automatisierungsprozeß mit einer geforderten Schnelligkeit unter allen Umständen ausführbar ist. Durch Änderung der ganzheitlichen Bearbeitungsspezifikation, insbesondere Art und Anzahl der Datenübertragungs-Einheiten, der Datenverarbeitungs-Einheiten sowie der modular aufgebauten Rechnerprogramme kann ein responsives System hergestellt werden, welches eine vorgegebene Ausführungszeit für den Automatisierungsprozeß sicher einhält.

Hierzu trägt auch eine Festlegung der Anfangszeitpunkte für eine periodische Abarbeitung der einzelnen Datenverarbeitungs-Einheiten und die Festlegung der Sendezeitpunkte für Daten-Telegramme, die von einer Datenverarbeitungs-Einheit zu der nächsten Datenverarbeitungs-Einheit übertragen werden, bei. Vorzugsweise werden die Datenverarbeitungs-Einheiten untereinander durch einen externen Zeitgeber synchronisiert, so daß eine Verschiebung von Anfangszeitpunkten und Sendezeitpunkten, d.h. eine Drift, vermieden wird. Vorteilhaft ist es, Änderungen in dem responsiven System zu erfassen und unter Berücksichtigung dieser Änderungen die maximale Ausführungs:zeit neu zu bestimmen oder, beispielsweise durch Abänderung der Sendezeitpunkte und Anfangszeitpunkte für eine periodische Abarbeitung, neu festzulegen. Hierdurch kann vor einer erneuten Inbetriebnahme des responsiven Systems sichergestellt werden, daß der Automatisierungsprozeß weiterhin während einer vorgegebenen Zeitdauer durchgeführt wird, was insbesondere für einen Automatisierungsprozeß im Rahmen der Sicherheitsleittechnik einer Kernkraftanlage von besonderer Bedeutung ist.

Anhand der Zeichnung werden Ausführungsbeispielse für das responsive System sowie das Verfahren zu seiner Herstellung näher erläutert. Es zeigen:
- FIG 1: einen schematischen Aufbau eines responsiven Systems, ohne Erläuterung der lokalen Anordnung der einzelnen Komponenten des Systems,
- FIG 2 und 3: schematisch die Abarbeitungsfolge der auf einer Datenverarbeitungs-Einheit zu bearbeitenden Rechnerprogrammen.

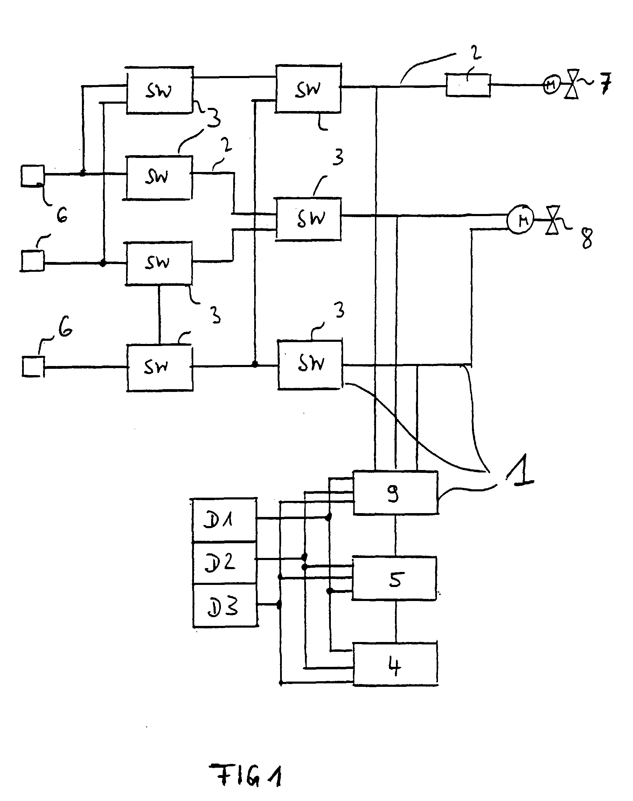

Das in FIG 1 schematisch dargestellte responsive System 1, weist eine Mehrzahl von Datenverarbeitungs-Einheiten 3 auf, die über Datenübertragungs-Einheiten 2 miteinander verbunden sind. Die Datenübertragungs-Einheiten 2 sind standardisierte Übertragungsleitungen, wie Ethernet-Koaxkabel, und ebenfalls standardisierte Übertragungselemente, wie Verstärker, Repeater oder Bridges. Den Datenverarbeitungs-Einheiten 3 wird ein Eingangssignal-Zustand über Signalerzeugungs-Elemente 6, welche beispielsweise Meßsensoren sind, zugeführt. In FIG 1 sind der Übersichtlichkeit halber nur drei solcher Signalerzeugungs-Elemente 6 dargestellt. Im Rahmen eines leittechnischen Systems, insbesondere eines Systems der Sicherheitsleittechnik einer Kernkraftanlage, sind eine Vielzahl solcher Signalerzeugungs-Elemente 6 an verschiedenen, unter Umständen weit voneinander entfernten Orten, beispielsweise in einem Reaktordruckbehälter, angeordnet. Die Datenverarbeitungs-Einheiten 3 sind mit den Datenübertragungs-Einheiten 2 zu einem Rechnernetz verbunden, an welches ein Timing-Modul 5, ein Scheduling-Modul 4, ein Überwachungs-Modul 9 sowie Datenbanken D1, D2 und D3 angeschlossen sind. Das responsive System 1, welches das Rechnernetz darstellt, ist mit Regelelementen 7 sowie Steuerungselementen 8 verbunden. Diese Regelelemente 7 sowie Steuerungselemente 8 sind beispielsweise motorsteuerbare Ventile, die in einem geöffneten Zustand zu einer Druckentlastung von durchströmten Rohrleitungen führen. An die Regelelemente 7 und die Steuerelemente 8, von denen jeweils der Übersichtlichkeit halber nur eines dargestellt ist, wird von dem responsiven System ein Ausgangssignalzustand übermittelt. Die Signalerzeugungs-Elemente 6 geben mit einer festen Periode einen jeweiligen aktuellen Eingangssignalzustand an das responsive System 1, welches spätestens nach einer maximalen Ausführungszeit hieraus den Ausgangssignalzustand bestimmt und an die Regelelemente 7 sowie die Steuerungselemente 8 überträgt. Auf jeder Datenverarbeitungs-Einheit 3 sind Rechnerprogramme SW implementiert, die modular aus einer Anzahl von elementaren Funktionsbausteinen aufgebaut sind. Eine Bestimmung der maximalen Ausführungszeit erfolgt in dem Timing-Modul 5, welches hierbei die in den Datenbanken D1, D2 und D3 gespeicherten Werte auswertet. Die Datenbank D1 enthält die maximale Bearbeitungszeit jedes Funktionbaustein in Abhängigkeit von der ihm zugeordneten Datenverarbeitungs-Einheit 3 sowie die maximale Übertragungszeit jeder Datenübertragungs-Einheit 2. Die Datenbank D2 enthält die Zuordnung der Datenverarbeitungs-Einheiten 3, der Datenübertragungs-Einheiten 2 und der Rechnerprogramme untereinander sowie die Schrittfolge der Signalverarbeitung gemaß einer ganzheitlichen Bearbeitungsspezifikation. Die Datenbank D3 enthält Kenngrößen der Datenverarbeitungs-Einheiten 3, der Datenübertragungs-Einheiten 2 und der Rechnerprogramme, wie Bauart, Versionsnummer, technische Spezifikation, Prozessortyp und andere. Anhand der Bearbeitungsspezifikation, welche einen Lösungsweg zur Ermittlung des gewünschten Ausgangssignalzustandes bei Vorliegen eines Eingangssignalzustands unter Berücksichtigung der verwendeten Rechnerprogramme und Datenverarbeitungs-Einheiten 3 sowie Datenübertragungs-Einheiten angibt, wird die Ermittlung der maximalen Ausführungszeit durchgeführt. Die Datenbanken D1, D2 und D3 können auch als eine einzige Datenbank mit entsprechenden Speicherbereichen realisiert sein.

FIG 2 zeigt schematisch die zeitliche Abarbeitung der auf einer Datenverarbeitungs-Einheit implementierten Rechnerprogramme. Diese Rechnerprogramme sind modular aus einer Anzahl von unterschiedlichen Funktionsbausteinen aufgebaut, wobei etwa 30 bis 50 unterschiedliche Funktionsbausteine Verwendung finden. Mit jedem Rechnerprogramm, welches im folgenden auch als Funktionsplan bezeichnet wird, wird eine Unteraufgabe eines Automatisierungsprozesses gelöst. Der Automatisierungsprozeß besteht aus Teilaufgaben, die wiederum modular in die Unteraufgaben, die Funktionspläne, unterteilt sind. Beispielsweise sind in der Sicherheitsleittechnik einer Kernkraftanlage bis zu 70 Teilaufgaben angegeben. Diese beziehen sich beispielsweise auf eine Reaktorschnellabschaltung, einen Turbinenschnellschluß oder eine Druckentlastung eines Reaktordruckbehälters bei als sicherheitstechnisch relevant eingestuften Bedingungen. Eine Abarbeitung der einzelnen Funktionspläne erfolgt jeweils mit einer für den jeweiligen Funktionsplan bestimmten Periode. Funktionspläne mit gleicher Bearbeitungsperiode werden zu sogenannten Funktionsplangruppen zusammengefaßt. Hier sind der übersichtlichkeithalber nur zwei Funktionsplangruppen, FPGa und FPGb, angegeben. Die Bearbeitungsperiode der schnelleren Funktionsplangruppe FPGa beträgt 5 ms und die der langsameren Funktionsplangruppe FPGb beträgt 50 ms. Da jede Funktionsplangruppe bis zu zwischen 50 und 100 einzelne Funktionspläne enthält, ist eine Unterteilung der Funktionsplangruppe in verschiedene Teile mit gleicher Bearbeitungsdauer ohne eine Zerteilung einzelner Funktionsplane möglich. Hierdurch ist eine Bearbeitung jedes Funktionsplans ohne Unterbrechung, d.h. ohne Ausladen und erneutes Einladen in den Prozessor der Datenverarbeitungs-Einheit, gewährleistet. Da die Periode der langsamen Funktionsplangruppe 50 ms beträgt, wird diese in zehn Teile unterteilt, die jeweils die gleiche Bearbeitungsdauer, beispielsweise von 2 ms, haben. Die Abarbeitung der Funktionsplangruppen erfolgt nun so, daß jeweils die schnellere Funktionsplangruppe FPGa und ein Teil der langsameren Funktionsplangruppe FPGb in den Prozessor eingeladen und dort bearbeitet werden.

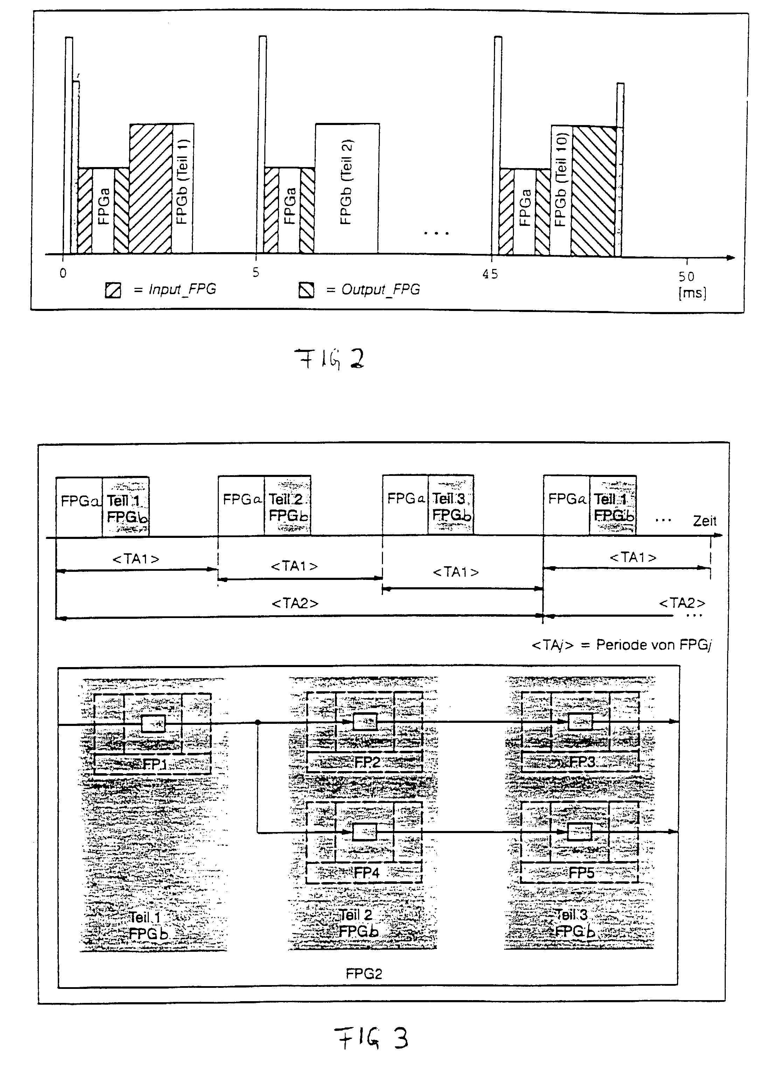

FIG 3 zeigt beispielhaft eine Unterteilung der langsameren Funktionsplangruppe FPGb in drei Teile, wobei ein erster Teil einen ersten Funktionsplan FP1, ein zweiter Teil einen zweiten Funktionsplan FP2 und einen vierten Funktionsplan FP4 enthält, die jeweils auf Werte des ersten Funktionsplans FP1 zurückgreifen. Der dritte Teil enthält einen dritten Funktionsplan FP3 und einen fünften Funktionsplan FP5, wobei der dritte Funktionsplan FP3 auf Werte des zweiten Funktionplans FP2 und der fünfte Funktionsplan FP5 auf Werte des vierten Funktionsplans FP4 zurückgreift. Nach Einladen der schnellen Funktionplangruppe FPGa und des entsprechenden Teiles der langsamen Funktionsplangruppe FPGb erfolgt jeweils ein Aufruf der Eingabe- und Ausgabetreiber und danach ein Einlesen der für die schnelle Funktionsplangruppe FPGa notwendigen Daten, die Bearbeitung der schnellen Funktionsplangruppe sowie eine Ausgabe der von der schnellen Funktionsplangruppe FPGa erzeugten Werte. Anschließend erfolgt eine Abarbeitung des jeweiligen Teiles der langsameren Funktionsplangruppe FPGb. Mit Ablauf der Periodendauer von 50 ms ist somit die schnellere Funktionsplangruppe FPGa zehnmal und die langsamere Funktionsplangruppe FPGb entsprechend ihrer Periodendauer genau einmal abgearbeitet worden. Zu Beginn dieser Periodendauer erfolgt zudem eine Abarbeitung der von der Datenverarbeitungs-Einheit empfangenen Daten-Telegramme sowie am Ende der langsameren Periode ein Versenden von Daten-Telegrammen mit den Ergebnissen der Funktionsplangruppe an die nachfolgende Datenverarbeitungs-Einheit. Die langsamste Funktionsplangruppe gibt somit die Anfangszeitpunkte für die Bearbeitung und das Empfangen von Daten-Telegrammen sowie den Sendezeitpunkt für das Versenden von Daten-Telegrammen an. Anhand der FIG 2 und 3 wurde die Aufteilung und Abarbeitung von Rechnerprogrammen in zwei Funktionsplangruppen mit unterschiedlicher Periodendauer beschrieben. Eine Aufteilung und Bearbeitung von Rechnerprogrammen in mehr als zwei Funktionsplangruppen erfolgt analog.

Die Erfindung zeichnet sich durch ein responsives Systm zur Signalverarbeitung aus, bei welchem vor Inbetriebnahme des Systems eine maximale Ausführungszeit zur Erzeugung eines Ausgangssignals-Zustandes aus einem Eingangssignal-Zustand bestimmt und als eine vorgegebene Ausfuhrungszeit festgelegt werden kann. Hierdurch kann schon vor Inbetriebnahme die Einhaltung von Zeitschranken und Zeitintervallen mit Sicherheit gewährleistet werden, so daß das responsive System nachgewiesen echzeitfahig und fehlertolerant ist. Eine Bestimmung der maximalen Ausführungszeit erfolgt unter Berücksichtigung des modularen Aufbaues von Rechnerprogrammen aus elementaren Funktionbausteinen sowie der jeweils maximalen Bearbeitungszeit jedes Funktionbausteines. Da weiterhin die Vernetzung der das responsive System bildenden Datenverarbeitungs-Einheiten, auf denen die Rechnerprogramme implementiert sind, bekannt ist und die Datenübertragungs-Einheiten, welche die Datenverarbeitungs-Einheiten miteinander verbinden, standardisiert und ebenfalls bekannt sind, ist die Ermittlung der maximalen Ausführungszeit sichergestellt. Bei einer periodischen Auswertung eines Eingangssignal-Zustandes kann zudem unter Festlegung der Sendezeitpunkte von Daten-Telegrammen und der Anfangszeitpunkte zur Bearbeitung der Rechnerprogramme auf den jeweiligen Datenverarbeitungs-Einheiten die Auslastung des Netzes sowie die maximale Ausführungszeit festgelegt werden. Dieser Vorgang wird als globales Scheduling bezeichnet. Durch ein lokales Scheduling, d.h. eine Festlegung der Bearbeitung der auf einer Datenverarbeitungs-Einheit implementierten Rechnerprogramme, kann eine weitgehend unterbrechungsfreie (interruptfreie) Bearbeitung erfolgen. Hierdurch wird das responsive System zusätzlich weniger fehleranfällig.

## Patentansprüche

1. Responsives System (1) zur Signalverarbeitung, in einem Automatisierungsprozeß mit einer Mehrzahl von Datenverarbeitungs-Einheiten (3),
- die über Datenübertragungs-Einheiten (2) miteinander verbunden sind und auf denen Rechnerprogramme (SW) implementiert sind, welche modular aus einer Anzahl von Funktionsbausteinen aufgebaut sind,
- und bei dem für jeden Funktionsbaustein eine maximale Bearbeitungszeit in Abhängigkeit von einer dem Funktionsbaustein zugeordneten jeweiligen Datenverarbeitungs-Einheit (3) sowie eine maximale Übertragungszeit jeder Datenübertaragungs-Einheit (2) bestimmt wird,
**dadurch gekennzeichnet**, daß
a) einer ganzheitlichen Bearbeitungsspezifikation des Automatisierungsprozesses folgend die Rechnerprogramme formal spezifiziert und automatisch modular aus den Funktionsbausteinen aufgebaut werden,
b) das System (1) zu einem Eingangssignalzustand gemäß der ganzheitlichen Bearbeitungsspezifikation umfassend Zuordnungen und Anforderungen der Datenverarbeitungs-Einheiten (3), der Datenübertraguns-Einheiten (2) und der Rechnerprogramme (SW) einen Ausgangssignalzustand erzeugt sowie weiterhin umfaßt
c) eine erste Datenbank (D1), in der die maximale Bearbeitungszeit jedes Funktionsbausteins (3) sowie die maximale Übertragungszeit jeder Datenübertragungs-Einheit (2) gespeichert sind,
d) eine zweite Datenbank (D2), in der Zuordnungen der beteiligten Datenverarbeitungs-Einheiten (3), der Datenübertragungs-Einheiten (2) und der beteiligten Rechnerprogramme (SW) untereinander sowie Schrittfolgen von Signalverarbeitungen gemäß der Bearbeitungsspezifikation gespeichert sind,
e) eine dritte Datenbank (D3), in der Kenngrößen der Datenverarbeitungs-Einheiten (3), der Datenübertragungs-Einheiten (2) und der Rechnerprogramme (SW), insbesondere Bauart, Versionsnummer und technische Spezifikation, gespeichert sind, und
f) ein Timing-Modul (5), welches aus den in den Datenbanken (D1, D2, D3) gespeicherten Daten eine maximale Ausführungszeit für die Erzeugung des Ausgangssignalzustandes aus dem Eingangssignalzustand des responsiven Systems (1) bestimmt.

2. Responsives System (1) nach Anspruch 1, mit einem Scheduling-Modul (4) zur Erstellung eines Scheduling-Plans, welcher Anfangszeitpunkte für eine periodische Abarbeitung der einzelnen Datenverarbeitungs-Einheiten (2) und Sendezeitpunkte für Daten-Telegramme beinhaltet, so daß die Ausführungszeit kleiner als eine vorgegebene Zeitdauer ist.

3. Responsives System (1) nach Anspruch 1 oder 2, mit einem Überwachungs-Modul (9), welches jede Änderung der Bearbeitungs- und Übertragungszeiten, insbesondere durch Veränderung der Datenverarbeitungs-Einheiten (3), der Datenübertragungs-Einheiten (2) oder der Funktionsbausteine, erfaßt und dem Timing-Modul (5) zur Bestimmung einer aktualisierten Ausführungszeit zuführt.

4. Responsives System (1) nach einem der vorhergehenden Ansprüche als leittechnisches System (la) zur Steuerung und/ oder Regelung einer industriellen Anlage, welche Signalerzeugungs-Elemente (6) und Regelelemente (7) und/oder Steuerungselemente (8) aufweist, wobei die Signalerzeugungs-Elemente (6) über die Datenverarbeitungs-Einheiten (2) und Datenübertragungs-Einheiten (3) mit den Regelelementen (7) und/oder den Steuerungselementen (8) verbunden sind.

5. Responsives System (1) nach einem der vorhergehenden Ansprüche, bei dem die einer Datenverarbeitungs-Einheit (2) zugeordnete Funktionsbausteine für eine periodische Abarbeitung in einer Funktionsplan-Gruppe (FPG) zusammengefaßt sind.

6. Responsives System (1) nach Anspruch 5, bei dem für eine Datenverarbeitungs-Einheit (2) die zugeordneten Funktionsbausteine in eine schnellen Funktionsplan-Gruppe (FBGa) mit einer kurzen Periodendauer t₀ und in eine langsamen Funktionsplan-Gruppe (FBGb) mit einer Periodendauer tₙ, die ein ganzzahliges Vielfaches der Periodendauer t₀ ist, eingeordnet sind.

7. Verfahren zur Herstellung eines responsiven Systems (1) zur Signalverarbeitung in einem Automatisierungsprozeß aus einer Mehrzahl von Datenverarbeitungs-Einheiten (3), die über Datenübertragungs-Einheiten (2) miteinander verbunden und auf denen modular aus einer Anzahl von Funktionsbausteinen aufgebaute Rechnerprogramme (SW) implementiert werden, und bei dem für jeden Funktionsbaustein eine maximale Bearbeitungszeit in Abhängigkeit von einer dem Funktionsbaustein zugeordneten jeweiligen Datenverarbeitungs-Einheit (3) sowie eine maximale Übertragungszeit jeder Datenübertragungs-Einheit (2) bestimmt wird,
**dadurch gekennzeichnet**, daß
a) einer ganzheitlichen Bearbeitungsspezifikation des Automatisierungsprozesses die Rechnerprogramme formal spezifiziert und automatisch modular aus den Funktionsbausteinen aufgebaut werden,
b) das System (1) zu einem Eingangssignalzustand gemäß der ganzheitlichen Bearbeitungsspezifikation umfassend Zuordnungen und Anforderungen der Datenverarbeitungs-Einheiten (3), der Datenübertragungs-Einheiten (2) und der Rechnerprogramme (SW) einen Ausgangssignalzustand erzeugt,
c) die Übertragungs- und Bearbeitungszeiten in einer ersten Datenbank (D1) gespeichert werden,
d) Zuordnungen der beteiligen Datenverarbeitungs-Einheiten (3), der Datenübertragungs-Einheiten (2) und der beteiligten Rechnerprogramme (SW) untereinander sowie Schrittfolgen von Signalverarbeitungen gemäß der Bearbeitungsspezifikation in einer zweiten Datenbank (D2) gespeichert werden,
e) Kenngrößen der Datenverarbeitungs-Einheiten (3) der Datenübertragungs-Einheiten (2) und der Rechnerprogramme (SW), insbesondere Bauart, Versionsnummer und technische Spezifikation, in einer dritten Datenbank (D3) gespeichert werden, und
f) aus den in den Datenbanken (D1, D2, D3) gespeicherten Daten unter Berücksichtigung der Vernetzung der Datenverarbeitungs-Einheiten (3) sowie dem modularen Aufbau der Rechnerprogramme (SW) eine maximale Ausführungszeit für den Automatisierungsprozeß bestimmt wird.

8. Verfahren nach Anspruch 7, bei dem Anfangszeitpunkte für eine periodische Abarbeitung der einzelnen Datenverarbeitungs-Einheiten (2) und Sendezeitpunkte für Daten-Telegramme so bestimmt werden, daß die Ausführungszeit kleiner als eine vorgegebene Zeitdauer ist.

9. Verfahren zur Bestimmung und Anpassung der Ausführungszeit für einen Automatisierungsprozeß, welcher von einem responsiven System (1) ausgeführt wird, wobei das responsive System (1) Datenverarbeitungs-Einheiten (3) mit aus Funktionsbausteinen modular aufgebauten Rechnerprogrammen und Datenübertragungs-Einheiten (2) aufweist, und bei dem für jeden Funktionsbaustein eine maximale Bearbeitungszeit in Abhängigkeit von einer dem Funktionsbaustein zugeordneten jeweiligen Datenverarbeitungs-Einheit (3) sowie eine maximale Übertragungszeit jeder Datenübertagungs-Einheit (2) bestimmt wird,
**dadurch gekennzeichnet**, daß
a) einer ganzheitlichen Bearbeitungsspezifikation des Automatisierungsprozesses folgend die Rechnerprogramme formal spezifiziert und automatisch modular aus den Funktionsbausteinen aufgebaut werden,
b) das System (1) zu einem Eingangssignalzustand gemäß der ganzheitlichen Bearbeitungsspezifikation umfassend Zuordnungen und Anforderungen der Datenverarbeitungs-Einheiten (3), der Datenübertragungs-Einheiten (2) und der Rechnerprogramme (SW) einen Ausgangssignalzustand erzeugt,
c) die Übertragungs- und Bearbeitungszeiten in einer ersten Datenbank (D1) gespeichert werden,
d) Zuordnungen der beteiligen Datenverarbeitungs-Einheiten (3), der Datenübertragungs-Einheiten (2) und der beteiligten Rechnerprogramme (SW) untereinander sowie Schrittfolgen von Signalverarbeitungen gemäß der Bearbeitungsspezifikation in einer zweiten Datenbank (D2) gespeichert werden,
e) Kenngrößen der Datenverarbeitungs-Einheiten (3) der Datenübertragungs-Einheiten (2) und der Rechnerprogramme (SW), insbesondere Bauart, Versionsnummer und technische Spezifikation, in einer dritten Datenbank (D3) gespeichert werden, und
f) aus den aktuellen Übertragungs- und Bearbeitungszeiten unter Berücksichtigung und/oder Veränderung der Zuordnung der Rechnerprogramme (SW) zu den Datenverarbeitungs-Einheiten (3) und/oder der Zuordnung der Datenverarbeitungs-Einheiten (3) zu den Datenübertragungs-Einheiten (2) eine maximale Ausführungszeit für die Erzeugung des Ausgangssignalzustandes aus dem Eingangssignalzustand des responsiven Systems (1) oder für den Automatisierungsprozeß bestimmt wird.

## Claims

1. Responsive system (1) for signal processing in an automation process, having a plurality of data processing units (3),
- which are connected to each other by way of data transmission units (2) and on which are implemented computer programs (SW) which are constructed in modular fashion from a number of function blacks,
- and in which responsive system there is determined for each function block a maximum processing time as a function of a respective data processing unit (3) allocated to the function block, and a maximum transmission time of each data transmission unit (2),
characterised in that
a) in accordance with an integrated processing specification of the automation process, the computer programs are specified in terms of form and automatically constructed in modular fashion from the function blocks,
b) the system (1) generates an output signal state with respect to an input signal state in accordance with the integrated processing specification including allocations and requests of the data processing units (3), data transmission units (2) and computer programs (SW), and further comprises
c) a first data base (D1), in which the maximum processing time of each function block (3) and the maximum transmission time of each data transmission unit (2) are stored,
d) a second data base (D2), in which allocations of the participating data processing units (3), the data transmission units (2) and the participating computer programs (SW) with respect to each other, and also step sequences of signal processing operations in accordance with the processing specification are stored,
e) a third data base (D3), in which parameters of the data processing units (3), data transmission units (2) and computer programs (SW), in particular model, version number and technical specification, are stored, and
f) a timing module (5) which determines from the data stored in the data bases (D1, D2, D3) a maximum execution time for the generation of the output signal state from the input signal state of the responsive system (1).

2. Responsive system (1) according to claim 1, having a scheduling module (4) for the creation of a scheduling plan, which contains starting instants for a periodic processing of the individual data processing units (2) and transmission instants for data messages, so that the execution time is shorter than a predetermined duration.

3. Responsive system (1) according to claim 1 or 2, having a monitoring module (9) which detects each change in the processing and transmission times, in particular as a result of alteration of the data processing units (3), data transmission units (2) or function blocks, and supplies it to the timing module (5) in order to determine an updated execution time.

4. Responsive system (1) according to one of the preceding claims as a control system (1a) for the control and/or regulation of an industrial installation, which has signal generating elements (6) and regulating elements (7) and/or control elements (8), with the signal generating elements (6) being connected to the regulating elements (7) and/or control elements (8) by way of the data processing units (2 (sic)) and data transmission units (3 (sic)).

5. Responsive system (1) according to one of the preceding claims, wherein the function blocks allocated to a data processing unit (2 (sic)) are combined in a sequential function chart group (FPG) for periodic processing.

6. Responsive system (1) according to claim 5, wherein for a data processing unit (2 (sic)), the associated function blocks are sorted into a fast sequential function chart group (FBGa (sic)) having a short period length t₀ and a slow sequential function chart group (FBGb (sic)) having a period length tₙ which is an integral multiple of the period length t₀.

7. Method for producing a responsive System (1) for signal processing in an automation process which comprises a plurality of data processing units (3), which are connected to each other by way of data transmission units (2) and on which are implemented computer programs (SW) which are constructed in modular fashion from a number of function blocks, and in which responsive system there is determined for each function block a maximum processing time as a function of a responsive data processing unit (3) allocated to the function block, and a maximum transmission time of each data transmission unit (2), characterised in that
a) in accordance with an integrated processing specification of the automation process, the computer programs are specified in terms of form and automatically constructed in modular fashion from the function blocks,
b) the system (1) generates an output signal state with respect to an input signal state in accordance with the integrated processing specification including allocations and requests of the data processing units (3), data transmission units (2) and computer programs (SW),
c) the transmission and processing times are stored in a first data base (D1),
d) allocations of the participating data processing units (3), the data transmission units (2) and the participating computer programs (SW) with respect to each other, and also step sequences of signal processing operations in accordance with the processing specification are stored in a second data base (D2),
e) parameters of the data processing units (3), data transmission units (2) and computer programs (SW), in particular model, version number and technical specification are stored in a third data base (D3), and
f) from the data stored in the data bases (D1, D2, D3), taking into account the networking of the data processing units (3) and the modular construction of the computer programs (SW), a maximum execution time for the automation process is determined.

8. Method according to claim 7, in which starting instants for a periodic processing of the individual data processing units (2) and transmission instants for data messages are determined in such a way that the execution time is shorter than a predetermined duration.

9. Method for determining and adapting the execution time for an automation process which is executed by a responsive system (1), with the responsive system (1) having data processing units (3) which have computer programs constructed in modular fashion from function blocks and data transmission units (2), and in which responsive system there is determined for each function block a maximum processing time as a function of a respective data processing unit (3) allocated to the function block, and a maximum transmission time of each data transmission unit (2),
characterised in that
a) in accordance with an integrated processing specification of the automation process, the computer programs are specified in terms of form and automatically constructed in modular fashion from the function blocks,
b) the system (1) generates an output signal state with respect to an input signal state in accordance with the integrated processing specification including allocations and requests of the data processing units (3), data transmission units (2) and computer programs (SW),
c) the transmission and processing times are stored in a first data base (D1),
d) allocations of the participating data processing units (3), the data transmission units (2) and the participating computer programs (SW) with respect to each other, and also step sequences of signal processing operations in accordance with the processing specification are stored in a second data base (D2),
e) parameters of the data processing units (3), data transmission units (2) and computer programs (SW), in particular model, version number and technical specification are stored in a third data base (D3), and
e) from the current transmission and processing times, taking into account and/or altering the allocation of the computer programs (SW) to the data processing units (3) and/or the allocation of the data processing units (3) to the data transmission units (2), a maximum execution time for the generation of the output signal state from the input signal state of the r.esponsive system (1) or for the automation process is determined.

## Revendications

1. Système auto-adaptatif (1) pour le traitement de signaux dans un processus d'automatisation ayant une multiplicité d'unités de traitement de données (3),
- qui sont reliées entre elles par l'intermédiaire d'unités de transmission de données (2) et sur lesquelles des programmes informatiques (SW) conçus de façon modulaire à partir d'un certain nombre de modules fonctionnels sont mis en oeuvre,
- selon lequel il est déterminé pour chaque module fonctionnel un temps de traitement maximal en fonction d'une unité de traitement de données (3) respective associée au module fonctionnel et un temps de transmission maximal de chaque unité de transmission de données (2),
caractérisé par le fait que
a) les programmes informatiques sont spécifiés formellement suivant une spécification de traitement globale du processus d'automatisation et sont constitués automatiquement de façon modulaire des modules fonctionnels,
b) le système (1) produit pour un état de signaux d'entrée selon la spécification de traitement globale, y compris des associations et des exigences des unités de traitement de données (3), des unités de transmission de données (2) et des programmes informatiques (SW), un état de signaux de sortie, et il comprend en outre
c) une première banque de données (D1) dans laquelle sont mémorisés le temps de traitement maximal de chaque module fonctionnel (3) et le temps de transmission maximal de chaque unité de transmission de données (2),
d) une deuxième banque de données (D2) dans laquelle sont mémorisées des associations mutuelles des unités de traitement de données (3) concernées, des unités de transmission de données (2) et des programmes informatiques (SW) concernés ainsi que des séquences d'étapes de traitements de signaux selon la spécification de traitement,
e) une troisième banque de données (D3) dans laquelle sont mémorisées des grandeurs caractéristiques des unités de traitement de données (3), des unités de transmission de données (2) et des programmes informatiques (SW), notamment le type, le numéro de version et la spécification technique, et
f) un module de timing (5) qui détermine à partir des données mémorisées dans les banques de données (D1, D2, D3) un temps d'exécution maximal pour la production de l'état de signaux de sortie à partir de l'état de signaux d'entrée du système auto-adaptatif (1).

2. Système auto-adaptatif (1) selon la revendication 1, ayant un module de scheduling (4) pour la production d'un plan de scheduling qui contient des instants de début pour un traitement périodique des unités de traitement de données (3) individuelles et des instants d'émission pour des télégrammes de données de telle sorte que le temps d'exécution soit inférieur à une durée prédéterminée.

3. Système auto-adaptatif (1) selon la revendication 1 ou 2, ayant un module de surveillance (9) qui détecte chaque modification des temps de traitement et de transmission, notamment à la suite d'une modification des unités de traitement de données (3), des unités de transmission de données (2) ou des modules fonctionnels, et qui l'envoie au module de timing (5) pour la détermination d'un temps d'exécution actualisé.

4. Système auto-adaptatif (1) selon l'une des revendications précédentes, conçu comme système de gestion (la) destiné à la commande et/ou à la régulation d'une installation industrielle qui comporte des éléments de production de signaux (6) et des éléments de régulation (7) et/ou des éléments de commande (8), les éléments de production de signaux (6) étant reliés par l'intermédiaire des unités de traitement de données (3) et des unités de transmission de données (2) aux éléments de régulation (7) et/ou aux éléments de commande (8).

5. Système auto-adaptatif (1) selon l'une des revendications précédentes, selon lequel les modules fonctionnels associés à une unité de traitement de données (3) sont rassemblés en un groupe de plans fonctionnels (FPG) en vue d'un traitement périodique.

6. Système auto-adaptatif (1) selon la revendication 5, selon lequel, pour une unité de traitement de données (3), les modules fonctionnels associés sont rangés en un groupe de plans fonctionnels rapide (FPGa) avec une courte période t₀ et en un groupe de plans fonctionnels lent (FPGb) avec une période tₙ qui est un multiple entier de la période t₀.

7. Procédé pour la production d'un système auto-adaptatif (1) qui est destiné au traitement de signaux dans un processus d'automatisation à partir d'une multiplicité d'unités de traitement de données (3), qui sont reliées entre elles par l'intermédiaire d'unités de transmission de données (2) et sur lesquelles des programmes informatiques (SW) constitués de façon modulaire d'un certain nombre de modules fonctionnels sont mis en oeuvre, et selon lequel, pour chaque module fonctionnel, on détermine un temps de traitement maximal en fonction d'une unité de traitement de données (3) respective associée au module fonctionnel et un temps de transmission maximal de chaque unité de transmission de données (2),
caractérisé par le fait que
a) les programmes informatiques sont spécifiés formellement suivant une spécification de traitement globale du processus d'automatisation et sont constitués automatiquement de façon modulaire des modules fonctionnels,
b) le système (1) produit pour un état de signaux d'entrée selon la spécification de traitement globale, y compris des associations et des exigences des unités de traitement de données (3), des unités de transmission de données (2) et des programmes informatiques (SW), un état de signaux de sortie,
c) les temps de transmission et de traitement sont mémorisés dans une première banque de données (D1),
d) des associations mutuelles des unités de traitement de données (3) concernées, des unités de transmission de données (2) et des programmes informatiques (SW) concernés ainsi que des séquences d'étapes de traitements de signaux selon la spécification de traitement sont mémorisées dans une deuxième banque de données (D2),
e) des grandeurs caractéristiques des unités de traitement de données (3), des unités de transmission de données (2) et des programmes informatiques (SW), notamment le type, le numéro de version et la spécification technique, sont mémorisées dans une troisième banque de données (D3), et
f) un temps d'exécution maximal pour le processus d'automatisation est déterminé à partir des données mémorisées dans les banques de données (D1, D2, D3) en tenant compte du réseau des unités de traitement de données (3) ainsi que de la structure modulaire des programmes informatiques (SW).

8. Procédé selon la revendication 7, selon lequel on détermine des instants de début pour un traitement périodique des unités de traitement de données (3) individuelles et des instants d'émission pour des télégrammes de données de telle sorte que le temps d'exécution soit inférieur à une durée prédéterminée.

9. Procédé pour la détermination et l'adaptation du temps d'exécution pour un processus d'automatisation qui est mis en oeuvre par un système auto-adaptatif (1), le système auto-adaptatif (1) comportant des unités de traitement de données (3) avec des programmes informatiques constitués de façon modulaire de modules fonctionnels et des unités de transmission de données (2), et selon lequel, pour chaque module fonctionnel, on détermine un temps de traitement maximal en fonction d'une unité de traitement de données (3) respective associée au module fonctionnel et un temps de transmission maximal de chaque unité de transmission de données (2),
caractérisé par le fait que
a) les programmes informatiques sont spécifiés formellement suivant une spécification de traitement globale du processus d'automatisation et sont structurés automatiquement de façon modulaire à partir des modules fonctionnels,
b) le système (1) produit pour un état de signaux d'entrée selon la spécification de traitement globale, y compris des associations et des exigences des unités de traitement de données (3), des unités de transmission de données (2) et des programmes informatiques (SW), un état de signaux de sortie,
c) les temps de transmission et de traitement sont mémorisés dans une première banque de données (D1),
d) des associations mutuelles des unités de traitement de données (3) concernées, des unités de transmission de données (2) et des programmes informatiques (SW) concernés ainsi que des séquences d'étapes de traitements de signaux selon la spécification de traitement sont mémorisées dans une deuxième banque de données (D2),
e) des grandeurs caractéristiques des unités de traitement de données (3), des unités de transmission de données (2) et des programmes informatiques (SW), notamment le type, le numéro de version et la spécification technique, sont mémorisées dans une troisième banque de données (D3), et
f) à partir des temps de transmission et de traitement et en tenant compte et/ou en modifiant l'association des programmes informatiques (SW) aux unités de traitement de données (3) et/ou l'association des unités de traitement de données (3) aux unités de transmission de données (2), on détermine un temps d'exécution maximal pour la production de l'état de signaux de sortie à partir de l'état de signaux d'entrée du système auto-adaptatif (1) ou pour le processus d'automatisation.
